# EUROPÄISCHE PATENTSCHRIFT

(11) **EP 1 647 089 B1**
(45) Veröffentlichungstag und Bekanntmachung des Hinweises auf die Patenterteilung: **07.05.2008**
(21) Anmeldenummer: 04738029.0
(22) Anmeldetag: 24.06.2004
(51) Int. Cl.: H02M 7/48

(54) **UMRICHTERSCHALTUNG**
RECTIFIER CIRCUIT
CIRCUIT CONVERTISSEUR

(30) Priorität: 23.07.2003 EP 03405558
(43) Veröffentlichungstag der Anmeldung: 19.04.2006
(73) Patentinhaber: ABB Schweiz AG, 5400 Baden (CH)
(72) Erfinder: STEIMER, Peter, CH-5424 Unterehrendingen (CH)
(74) Vertreter: ABB Patent Attorneys
(86) Internationale Anmeldenummer: PCT/CH2004/000388
(87) Internationale Veröffentlichungsnummer: WO 2005/008874

(56) Entgegenhaltungen:
- WO-A-01/93412
- WO-A-03/017457
- US-A1- 2003 060 326
- US-A1- 2003 128 563
- US-B1- 6 459 596
- YOSHIKAWA T ET AL: "Analysis of parallel operation methods of PWM inverter sets for an ultra-high speed elevator" APPLIED POWER ELECTRONICS CONFERENCE AND EXPOSITION, 2000. APEC 2000. FIFTEENTH ANNUAL IEEE NEW ORLEANS, LA, USA 6-10 FEB. 2000, PISCATAWAY, NJ, USA,IEEE, US, 6. Februar 2000 (2000-02-06), Seiten 944-950, XP010371647 ISBN: 0-7803-5864-3

## Beschreibung

### Technisches Gebiet

Die Erfindung bezieht sich auf das Gebiet der Leistungselektronik. Sie geht aus von einer Umrichterschaltung gemäss dem Oberbegriff der unabhängigen Ansprüche.

### Stand der Technik

Umrichterschaltungen werden heute in einer Fülle von leistungselektronischen Anwendungen eingesetzt. Die Anforderungen an eine solche Umrichterschaltung sind dabei zum einen, möglichst wenig Oberschwingungen eines an Phasen der Umrichterschaltung gängigerweise angeschlossenen elektrischen Wechselspannungsnetzes zu erzeugen und zum anderen mit einer möglichst geringen Anzahl an elektronischen Bauelementen möglichst grosse Leistungen zu übertragen. Eine geeignete Umrichterschaltung ist in der WO 01/93412 A2 angegeben. Darin ist ein erstes Schaltgruppensystem für jede Phase vorgesehen, welches eine durch einen Leistungshalbleiterschalter und durch einen mit dem Leistungshalbleiterschalter verbundenen Kondensator gebildete erste Hauptschaltgruppe aufweist. Der Leistungshalbleiterschalter der ersten Hauptschaltgruppe ist durch einen Bipolartransistor mit isoliert angeordneter Ansteuerelektrode (IGBT - Insulated Gate Bipolartransistor) und durch eine dem Bipolartransistor antiparallel geschaltete Diode gebildet. Der Leistungshalbleiterschalter der ersten Hauptschaltgruppe ist somit durch ein aktives ansteuerbares elektronisches Bauelement, nämlich dem Bipolartransistor, und zusätzlich durch die Diode gebildet, so dass mit dem derart gebildeten Leistungshalbleiterschalter eine bidirektionale Stromführungsrichtung ermöglicht ist. Weiterhin weist das erste Schaltgruppensystem mindestens eine durch zwei in Serie geschaltete ansteuerbare Leistungshalbleiterschalter und durch einen Kondensator gebildete Zwischenschaltgruppe auf, wobei die oder eine Zwischenschaltgruppe mit der ersten Hauptschaltgruppe verbunden ist. Jeder der ansteuerbaren Leistungshalbleiterschalter der Zwischenschaltgruppe ist ebenfalls durch einen Bipolartransistor mit isoliert angeordneter Ansteuerelektrode und durch eine dem Bipolartransistor antiparallel geschaltete Diode gebildet. Ferner umfasst das erste Schaltgruppensystem eine durch einen Leistungshalbleiterschalter gebildete zweite Hauptschaltgruppe, wobei die oder eine Zwischenschaltgruppe mit der zweiten Hauptschaltgruppe verbunden ist. Der Leistungshalbleiterschalter der zweiten Hauptschaltgruppe ist auch durch einen Bipolartransistor mit isoliert angeordneter Ansteuerelektrode und durch eine dem Bipolartransistor antiparallel geschaltete Diode gebildet. Der Leistungshalbleiterschalter der zweiten Hauptschaltgruppe ist somit auch durch ein aktives ansteuerbares elektronisches Bauelement, nämlich dem Bipolartransistor mit isoliert angeordneter Ansteuerelektrode, und zusätzlich durch die Diode gebildet, wobei mit dem derart gebildeten Leistungshalbleiterschalter ebenfalls die bereits erwähnte bidirektionale Stromführungsrichtung ermöglicht ist.

Problematisch bei einer Umrichterschaltung nach der WO 01/93412 A2 ist, dass der Leistungshalbleiterschalter der ersten Hauptschaltgruppe und der zweiten Hauptschaltgruppe eine Vielzahl an elektronischen Bauelementen aufweisen, d.h. dass der Leistungshalbleiterschalter durch den Bipolartransistor mit isoliert angeordneter Ansteuerelektrode und zusätzlich durch die Diode gebildet ist. Die grosse Anzahl an elektronischen Bauelementen macht die Umrichterschaltung bezüglich ihres Aufbaus kompliziert, verursacht hohe Kosten der Umrichterschaltung und erfordert einen enormen Platzbedarf aufgrund der elektronischen Bauelemente selbst und aufgrund deren Verkabelung. Durch den Einsatz des Bipolartransistors mit isoliert angeordneter Ansteuerelektrode im Leistungshalbleiterschalter der ersten und zweiten Hauptschaltgruppe ist es desweiteren notwendig, entsprechende Ansteuerschaltungen vorzusehen, wodurch ein hoher Ansteueraufwand notwendig ist, sich der Verkabelungsaufwand weiter erhöht und zusätzlicher Platzbedarf notwendig ist, so dass die Kosten für eine Umrichterschaltung nach der WO 01/93412 A2 weiter ansteigen. Durch den komplizierten Aufbau der Umrichterschaltung mit den vielen elektronischen Bauelementen, den hohen Ansteueraufwand und den grossen Verkabelungsaufwand ist die Umrichterschaltung nach der WO 01/93412 A2 störanfällig, so dass die Verfügbarkeit der Umrichterschaltung insgesamt klein ist. Zudem ist der Bipolartransistor mit isoliert angeordneter Ansteuerelektrode ein teueres und, durch seine Bauart bedingt, ein störanfälliges elektronisches Bauelement, so dass die Verfügbarkeit der Umrichterschaltung weiter absinkt.

Darüber hinaus arbeitet die Umrichterschaltung nach der WO 01/93412 A2 in vielen Betriebsanwendungen der Umrichterschaltung, wie beispielsweise bei Zwei-Quadranten-Betriebsanwendungen, unwirtschaftlich, da dann der Bipolartransistor mit isoliert angeordneter Ansteuerelektrode des Leistungshalbleiterschalters der ersten und zweiten Hauptschaltgruppe zwar angesteuert wird, aber strommässig überhaupt nicht oder nur sehr schwach belastet wird.

In der US 2003/0128563 A1 ist eine alternative Umrichterschaltung für mindestens eine Phase angegeben, welche Umrichterschaltung ein für eine einzige dieser Phasen vorgesehenes Schaltgruppensystem aufweist, welches eine durch einen Leistungshalbleiterschalter und durch einen mit dem Leistungshalbleiterschalter verbundenen zugehörigen Kondensator gebildete erste Hauptschaltgruppe aufweist, wobei der Leistungshalbleiterschalter der ersten Hauptschaltgruppe durch ein passives nicht ansteuerbares elektronisches Bauelement mit unidirektionaler Stromführungsrichtung gebildet ist. Weiterhin weist das Schaltgruppensystem eine durch zwei in Serie geschaltete ansteuerbare Leistungshalbleiterschalter und durch einen Kondensator gebildete Zwischenschaltgruppe auf, wobei die Zwischenschaltgruppe mit der ersten Hauptschaltgruppe verbunden ist. Ferner weist das Schaltgruppensystem eine durch einen Leistungshalbleiterschalter gebildete zweite Hauptschaltgruppe auf, wobei der Leistungshalbleiterschalter der zweiten Hauptschaltgruppe durch ein passives nicht ansteuerbares elektronisches Bauelement mit unidirektionaler Stromführungsrichtung gebildet ist und die oder eine Zwischenschaltgruppe mit der zweiten Hauptschaltgruppe verbunden ist.

Problematisch bei einer Umrichterschaltung nach der US 2003/0128563 A1 ist, dass durch den Kondensator der ersten Hauptschaltgruppe und durch den Kondensator der Zwischenschaltgruppe 7 nur eine äusserst begrenzte der Speicherfähigkeit von elektrischer Energie der gesamten Umrichterschaltung erreicht ist. Daraus folgt, dass an den beiden Kondensatoren unerwünschte Spannungsschwingungen und Stromschwingungen vorliegen, welche beispielsweise von einer dynamischen elektrische Last hervorgerufen werden können, welche Spannungsschwingungen und Stromschwingungen durch die geringe Speicherfähigkeit der Kondensatoren nicht gedämpft werden können. Die Folge ist dann, dass Oberschwingungen an den Phasen der Umrichterschaltung auftreten, die äusserst unerwünscht in einem üblicherweise an die Phasen angeschlossenen elektrischen Wechselspannungsnetz sind. WO 03/017457 A1 gibt eine weitere alternative Umrichterschaltung für mindestens eine Phase am.

### Darstellung der Erfindung

Aufgabe der Erfindung ist es deshalb, eine Umrichterschaltung für mindestens eine Phase anzugeben, bei welcher sich ein möglichst grosses Mass an elektrischer Energie speichern lässt. Diese Aufgabe wird durch die Merkmale des Anspruchs 1 beziehungsweise des Anspruchs 2 gelöst. In den abhängigen Ansprüchen sind vorteilhafte Weiterbildungen der Erfindung angegeben.

Die erfindungsgemässe Umrichterschaltung für mindestens eine Phase umfasst für jede Phase ein erstes Schaltgruppensystem, welches eine durch einen Leistungshalbleiterschalter und durch einen mit dem Leistungshalbleiterschalter verbundenen Kondensator gebildete erste Hauptschaltgruppe aufweist, wobei der Leistungshalbleiterschalter der ersten Hauptschaltgruppe durch ein passives nicht ansteuerbares elektronisches Bauelement mit unidirektionaler Stromführungsrichtung gebildet ist. Zudem umfasst das erste Schaltgruppensystem mindestens eine durch zwei in Serie geschaltete ansteuerbare Leistungshalbleiterschalter und durch einen Kondensator gebildete Zwischenschaltgruppe, wobei die oder eine Zwischenschaltgruppe mit der ersten Hauptschaltgruppe verbunden ist. Das erste Schaltgruppensystem weist weiterhin eine durch einen Leistungshalbleiterschalter gebildete zweite Hauptschaltgruppe auf, wobei der Leistungshalbleiterschalter der zweiten Hauptschaltgruppe durch ein passives nicht ansteuerbares elektronisches Bauelement mit unidirektionaler Stromführungsrichtung gebildet ist und die oder eine Zwischenschaltgruppe mit der zweiten Hauptschaltgruppe verbunden ist. Erfindungsgemäss sind bei vorgesehenen mehreren Phasen die ersten Schaltgruppensysteme der Phasen parallel miteinander verbunden. Alternativ dazu sind erfindungsgemäss für jede Phase n weitere Schaltgruppensysteme vorgesehen sind, wobei n ≥ 1 ist und bei jedem der n weiteren Schaltgruppensysteme die der ersten Hauptschaltgruppe benachbarte Zwischenschaltgruppe in Serie zur ersten Hauptschaltgruppe geschaltet ist und die der zweiten Hauptschaltgruppe benachbarte Zwischenschaltgruppe in Serie zur zweiten Hauptschaltgruppe geschaltet ist. Die erste Hauptschaltgruppe des ersten Schaltgruppensystems und die ersten Hauptschaltgruppen der n weiteren Schaltgruppensysteme sind dann zueinander in Serie geschaltet, wobei die zweite Hauptschaltgruppe des ersten Schaltgruppensystems und die zweiten Hauptschaltgruppen der n weiteren Schaltgruppensysteme zueinander in Serie geschaltet sind. Bei mehreren Phasen sind die n-ten weiteren Schaltgruppensysteme der Phasen parallel miteinander verbunden. Durch Parallelschaltung der ersten Schaltgruppensysteme der Phasen beziehungsweise der n-ten weiteren Schaltgruppensysteme der Phasen, d.h. der Kondensatoren der ersten Hauptschaltgruppen der ersten Schaltgruppensysteme beziehungsweise der n-ten weiteren Schaltgruppensysteme sowie der Kondensatoren der Zwischenschaltgruppen der ersten Schaltgruppensysteme beziehungsweise der n-ten weiteren Schaltgruppensysteme, kann vorteilhaft eine Erhöhung der Speicherfähigkeit von elektrischer Energie der gesamten Umrichterschaltung erreicht werden, insbesondere da sich die Kapazitätswerte der parallel geschalteten Kondensatoren addieren. Darüber hinaus können durch die Parallelschaltung der Kondensatoren der ersten Hauptschaltgruppen und der Kondensatoren der Zwischenschaltgruppen unerwünschte Schwingungen der Spannung und des Stromes an den parallel geschalteten Kondensatoren der ersten Hauptschaltgruppen und an den parallel geschalteten Kondensatoren der Zwischenschaltgruppen gedämpft und somit vorteilhaft nahezu vermieden werden. Solche unerwünschten Schwingungen treten dann auch weitestgehend nicht an den Phasen der Umrichterschaltung und damit schlussendlich auch nahezu nicht in einem üblicherweise an die Phasen angeschlossenen elektrischen Wechselspannungsnetz auf.

Dadurch, dass der Leistungshalbleiterschalter der ersten Hauptschaltgruppe und der Leistungshalbleiterschalter der zweiten Hauptschaltgruppe jeweils nur durch ein passives nicht ansteuerbares elektronisches Bauelement mit unidirektionaler Stromführungsrichtung gebildet ist und somit jeweils ohne ein aus dem Stand der Technik ferner bekanntes aktives ansteuerbares elektronisches Bauelement, beispielsweise einen Bipolartransistor mit isoliert angeordneter Ansteuerelektrode, auskommt, ist eine mit sehr wenigen elektronischen Bauelementen auskommende und damit sehr einfache und unkomplizierte Umrichterschaltung erreicht. Desweiteren ist die erfindungsgemässe Umrichterschaltung durch die geringe Anzahl an elektronischen Bauelementen zudem kostengünstig zu realisieren und zu betreiben, weist einen sehr geringen Ansteuer- und Verkabelungsaufwand auf, benötigt dadurch nur wenig Platz und zeichnet sich durch eine geringe Störanfälligkeit und damit durch eine hohe Verfügbarkeit aus.

Darüber hinaus kann die erfindungsgemässe Umrichterschaltung sehr wirtschaftlich betrieben werden, da der als passives nicht ansteuerbares elektronisches Bauelement mit unidirektionaler Stromführungsrichtung ausgebildete Leistungshalbleiterschalter der ersten und zweiten Hauptschaltgruppe beim Betrieb der Umrichterschaltung an der Stromführung beteiligt ist und somit in einem hohen Masse ausgelastet ist.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine erste Ausführungsform einer erfindungsgemässen Umrichterschaltung,
- Fig. 2: eine zweite Ausführungsform der erfindungsgemässen Umrichterschaltung,
- Fig. 3: eine dritte Ausführungsform der erfindungsgemässen Umrichterschaltung,
- Fig. 4: eine vierte Ausführungsform der erfindungsgemässen Umrichterschaltung,
- Fig. 5: eine fünfte Ausführungsform der erfindungsgemässen Umrichterschaltung,
- Fig. 6: eine sechste Ausführungsform der erfindungsgemässen Umrichterschaltung,
- Fig. 7: eine siebte Ausführungsform der erfindungsgemässen Umrichterschaltung,
- Fig. 8: eine achte Ausführungsform der erfindungsgemässen Umrichterschaltung,
- Fig. 9: eine neunte Ausführungsform der erfindungsgemässen Umrichterschaltung und
- Fig. 10: eine beispielhafte Darstellung der vierten Ausführungsform gemäss Fig. 4 der erfindungsgemässen Umrichterschaltung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

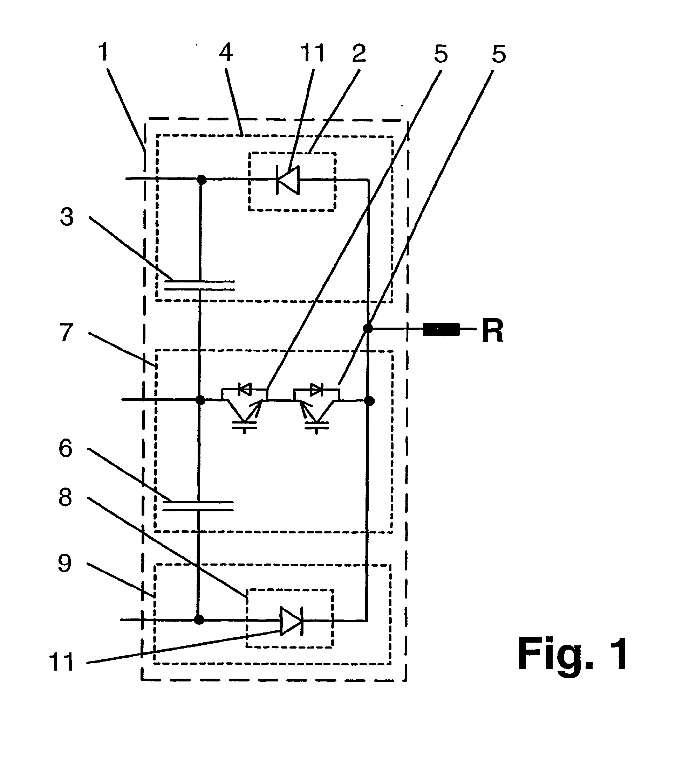

In Fig. 1 ist eine, insbesondere einphasige, erste Ausführungsform einer erfindungsgemässen Umrichterschaltung gezeigt. Darin umfasst die Umrichterschaltung für mindestens eine Phase R, S, T ein für jede Phase R, S, T vorgesehenes erstes Schaltgruppensystem 1, welches eine durch einen Leistungshalbleiterschalter 2 und durch einen mit dem Leistungshalbleiterschalter 2 verbundenen Kondensator 3 gebildete erste Hauptschaltgruppe 4 aufweist. Ferner weist das erste Schaltgruppensystem 1 mindestens eine durch zwei in Serie geschaltete ansteuerbare Leistungshalbleiterschalter 5 und durch einen Kondensator 6 gebildete Zwischenschaltgruppe 7 auf, wobei die oder eine Zwischenschaltgruppe 7 mit der ersten Hauptschaltgruppe 4 verbunden ist. Die zwei in Serie geschalteten ansteuerbaren Leistungshalbleiterschalter 5 der Zwischenschaltgruppe 7 sind gemäss Fig. 1 jeweils als Bipolartransistoren mit isoliert angeordneten Ansteuerelektroden und antiparallel geschalteten Dioden ausgeführt. Zudem weist das erste Schaltgruppensystem 1 eine durch einen Leistungshalbleiterschalter 8 gebildete zweite Hauptschaltgruppe 9 auf, wobei die oder eine Zwischenschaltgruppe 7 mit der zweiten Hauptschaltgruppe 9 verbunden ist. Der Leistungshalbleiterschalter 2 der ersten Hauptschaltgruppe 4 ist durch ein passives nicht ansteuerbares elektronisches Bauelement 11 mit unidirektionaler Stromführungsrichtung und der Leistungshalbleiterschalter 8 der zweiten Hauptschaltgruppe 9 ebenfalls durch ein passives nicht ansteuerbares elektronisches Bauelement 11 mit unidirektionaler Stromführungsrichtung gebildet.

Die erfindungsgemässe Umrichterschaltung kommt somit ohne ein bekanntes aktives ansteuerbares elektronisches Bauelement, beispielsweise einen Bipolartransistor mit isoliert angeordneter Ansteuerelektrode, für die erste und zweite Hauptschaltgruppe 4, 9 aus, da der Leistungshalbleiterschalter 2 der ersten Hauptschaltgruppe 4 und der Leistungshalbleiterschalter 8 der zweiten Hauptschaltgruppe 8 jeweils nur durch ein passives nicht ansteuerbares elektronisches Bauelement 11 mit unidirektionaler Stromführungsrichtung gebildet ist. Durch diese Massnahme ist eine mit sehr wenigen elektronischen Bauelementen auskommende und damit sehr einfache und unkomplizierte Umrichterschaltung erreicht. Ferner ist die erfindungsgemässe Umrichterschaltung durch die geringe Anzahl an elektronischen Bauelementen zudem kostengünstig zu realisieren und zu betreiben, weist einen sehr geringen Ansteuer- und Verkabelungsaufwand auf, benötigt dadurch nur wenig Platz und zeichnet sich durch eine geringe Störanfälligkeit und damit durch eine hohe Verfügbarkeit aus.

Darüber hinaus kann die erfindungsgemässe Umrichterschaltung sehr wirtschaftlich betrieben werden, da der als passives nicht ansteuerbares elektronisches Bauelement 11 mit unidirektionaler Stromführungsrichtung ausgebildete Leistungshalbleiterschalter 2, 8 der ersten und zweiten Hauptschaltgruppe 4, 9 beim Betrieb der Umrichterschaltung an der Stromführung beteiligt ist und somit in einem hohen Masse ausgelastet ist.

Die erfindungsgemässe Umrichterschaltung ist für einen Zweiquadrantenbetrieb als Gleichrichter und als Phasenschieber beispielsweise zur Kompensation von Blindleistung betreibbar beziehungsweise einsetzbar. Vorzugsweise wird die erfindungsgemäss Umrichterschaltung mit einem dreiphasigen, preiswerten Standardtransformator auf der Phasenseite an Stelle von 12-pulsigen, 18-pulsigen oder 24-pulsigen Gleichrichterschaltungen mit aufwändigen Spezialtransformatoren eingesetzt.

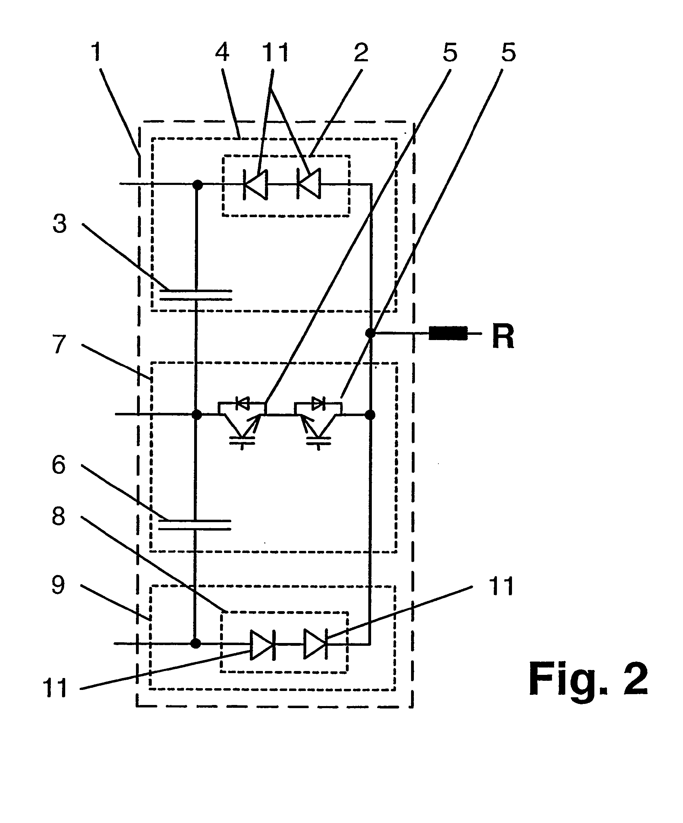

In Fig. 2 ist eine zweite Ausführungsform der erfindungsgemässen Umrichterschaltung gezeigt. Darin weist beim ersten Schaltgruppensystem 1 der Leistungshalbleiterschalter 2 der ersten Hauptschaltgruppe 4 ein weiteres passives nicht ansteuerbares elektronisches Bauelement 11 mit unidirektionaler Stromführungsrichtung auf, wobei das weitere elektronische Bauelement 11 in Serie zum bestehenden elektronischen Bauelement 11 geschaltet ist. Zudem weist gemäss Fig. 2 beim ersten Schaltgruppensystem 1 der Leistungshalbleiterschalter 8 der zweiten Hauptschaltgruppe 9 ebenfalls ein weiteres passives nicht ansteuerbares elektronisches Bauelement 11 mit unidirektionaler Stromführungsrichtung auf, wobei das weitere elektronische Bauelement 11 in Serie zum bestehenden elektronischen Bauelement 11 geschaltet ist. Vorzugsweise ist das bestehende und das weitere passive nicht ansteuerbare elektronische Bauelement 11 gemäss Fig. 1 beziehungsweise gemäss Fig. 2 eine Diode. In Fig. 1 ist die Diode als hochsperrende Diode, d.h. eine Diode mit einer hohen Sperrspannung, ausgebildet. Die Serienschaltung des bestehenden passiven nicht ansteuerbaren elektronischen Bauelementes 11 mit unidirektionaler Stromführungsrichtung mit dem weiteren passiven nicht ansteuerbarenelektronischen Bauelementes 11 mit unidirektionaler Stromführungsrichtung bezüglich der ersten und zweiten Hauptschaltgruppe 4, 9 gemäss Fig. 2 bewirkt weiterhin, dass sich die Spannung über beiden elektronischen Bauelementen 11 aufteilt und somit insgesamt eine höhere Sperrfähigkeit der erfindungsgemässen Umrichterschaltung erreicht werden kann und damit eine grössere Leistung durch die erfindungsgemässe Umrichterschaltung übertragen werden kann.

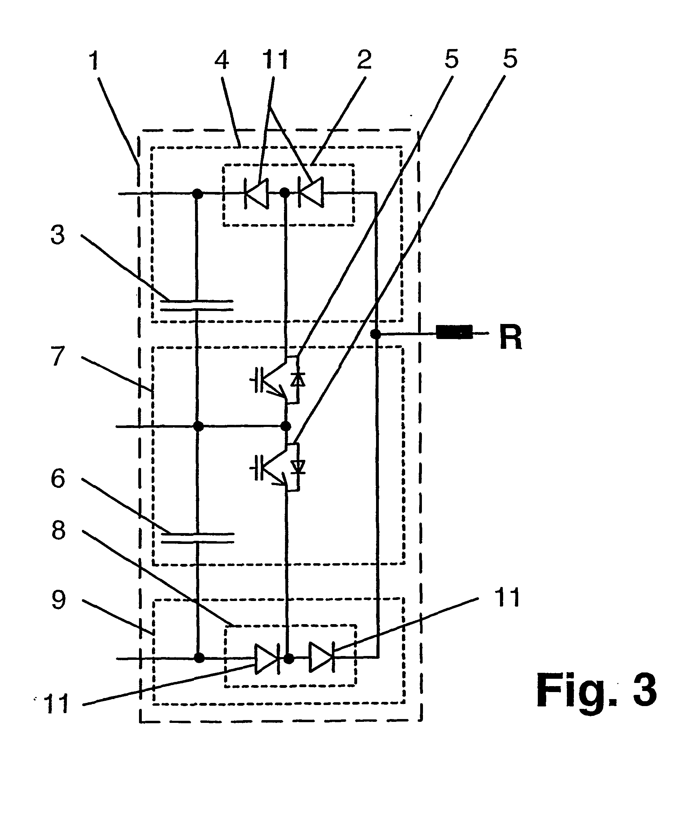

Bei den in Fig. 1 und Fig. 2 gezeigten Ausführungsformen der erfindungsgemässen Umrichterschaltung ist beim ersten Schaltgruppensystem 1 einer der ansteuerbaren Leistungshalbleiterschalter 5 einer jeden Zwischenschaltgruppe 7 mit dem Kondensator 6 derselben Zwischenschaltgruppe 7 verbunden. Desweiteren ist die der ersten Hauptschaltgruppe 4 benachbarte Zwischenschaltgruppe 7 parallel zur ersten Hauptschaltgruppe 4 geschaltet und die der zweiten Hauptschaltgruppe 9 benachbarte Zwischenschaltgruppe 7 parallel zur zweiten Hauptschaltgruppe 9 geschaltet. Im Unterschied zu den beiden Ausführungsformen der erfindungsgemässen Umrichterschaltung nach Fig. 1 und Fig. 2 ist bei einer dritten Ausführungsform der erfindungsgemässen Umrichterschaltung gemäss Fig. 3 beim ersten Schaltgruppensystem 1 der Verbindungspunkt der beiden ansteuerbaren Leistungshalbleiterschalter 5 einer jeden Zwischenschaltgruppe 7 mit dem Kondensator 6 derselben Zwischenschaltgruppe 7 verbunden, wobei die der ersten Hauptschaltgruppe 4 benachbarte Zwischenschaltgruppe 7 mit dem einen der beiden ansteuerbaren Leistungshalbleiterschalter 5 mit dem Verbindungspunkt der beiden elektronischen Bauelemente 11 der ersten Hauptschaltgruppe 4 verbunden ist. Darüber hinaus ist gemäss Fig. 3 beim ersten Schaltgruppensystem 1 die der zweiten Hauptschaltgruppe 9 benachbarte Zwischenschaltgruppe 7 mit dem anderen der beiden ansteuerbaren Leistungshalbleiterschalter 5 mit dem Verbindungspunkt der beiden elektronischen Bauelemente 11 der zweiten Hauptschaltgruppe 9 verbunden.

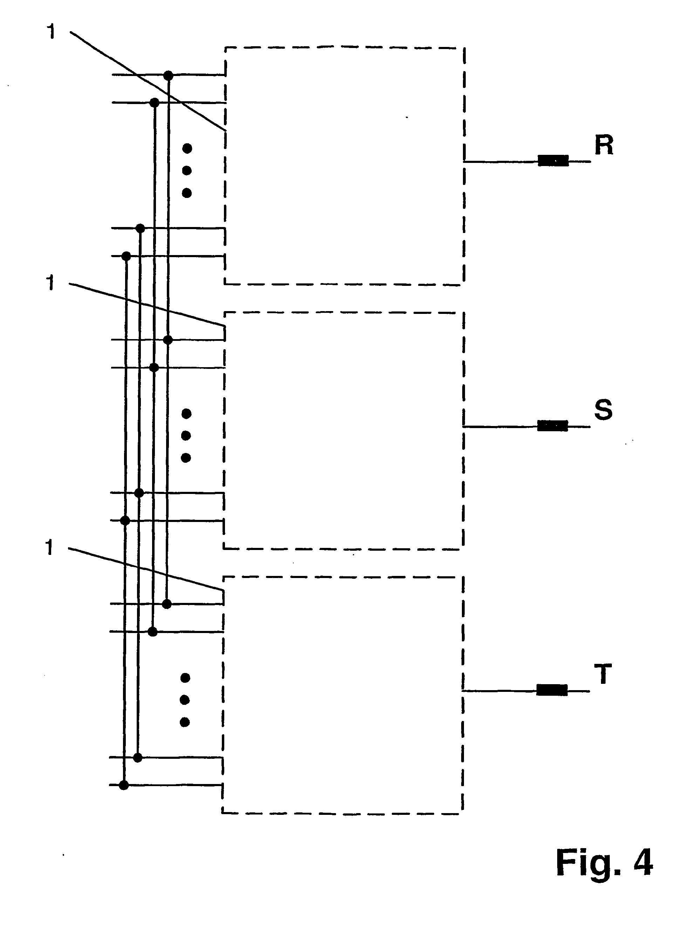

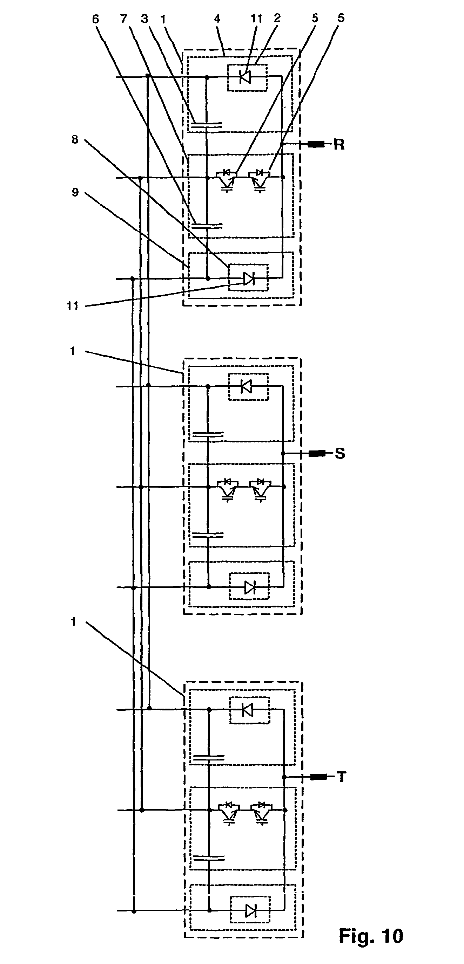

In Fig. 4 ist eine vierte Ausführungsform der erfindungsgemässen Umrichterschaltung gezeigt. Darin sind bei mehreren Phasen R, S, T, insbesondere bei den in Fig. 4 gezeigten drei Phasen R, S, T, die ersten Schaltgruppensysteme 1 der Phasen R, S, T parallel miteinander verbunden, d.h. die Kondensatoren 3 der ersten Hauptschaltgruppen 4 der ersten Schaltgruppensysteme 1 der Phasen R, S, T sind miteinander parallel verbunden und die Kondensatoren 6 der Zwischenschaltgruppen 7 der ersten Schaltgruppensysteme 1 der Phasen R, S, T sind miteinander parallel verbunden. Gemäss Fig. 4 sind die zweiten Hauptschaltgruppen 9 der ersten Schaltgruppensysteme 1 zudem miteinander verbunden. In Fig. 10 ist zum besseren Verständnis dazu eine beispielhafte Darstellung der vierten Ausführungsform gemäss Fig. 4 der erfindungsgemässen Umrichterschaltung mit ersten Schaltgruppensystemen 1 gemäss Fig. 1 gezeigt. Mittels der Parallelschaltung der ersten Schaltgruppensysteme 1 der Phasen R, S, T, d.h. der Kondensatoren 3 der ersten Hauptschaltgruppen 4 und der Kondensatoren 6 der Zwischenschaltgruppen 7 wird vorteilhaft eine Erhöhung der Speicherfähigkeit von elektrischer Energie der gesamten Umrichterschaltung erreicht. Darüber hinaus kann durch die Parallelschaltung der Kondensatoren 3 der ersten Hauptschaltgruppen 4 und der Kondensatoren 6 der Zwischenschaltgruppen 7 unerwünschte Schwingungen der Spannung und des Stromes an den parallel geschalteten Kondensatoren 3 der ersten Hauptschaltgruppen 4 und an den parallel geschalteten Kondensatoren 6 der Zwischenschaltgruppen 7 gedämpft und somit vorteilhaft weitestgehend vermieden werden. Solche unerwünschten Schwingungen treten dann auch weitestgehend nicht an den Phasen R, S, T der Umrichterschaltung und damit schlussendlich auch nahezu nicht in einem üblicherweise an die Phasen angeschlossenen elektrischen Wechselspannungsnetz auf. Zudem bewirkt ein Anschluss einer elektrischen Einrichtung, beispielsweise einer Ladeeinrichtung, an einen der Kondensatoren 3 der ersten Hauptschaltgruppen 4 beziehungsweise an einen der Kondensatoren 6 der Zwischenschaltgruppen 7, dass alle Kondensatoren 3 der ersten Hauptschaltgruppen 4 beziehungsweise alle Kondensatoren 6 der Zwischenschaltgruppen 7 an die elektrische Einrichtung angeschlossen sind, so dass ein einzelnes Anschliessen der elektrischen Einrichtung an jeden der Kondensatoren der ersten Hauptschaltgruppen 4 beziehungsweise an jeden der Kondensatoren 6 der Zwischenschaltgruppen 7 vorteilhaft entfallen kann.

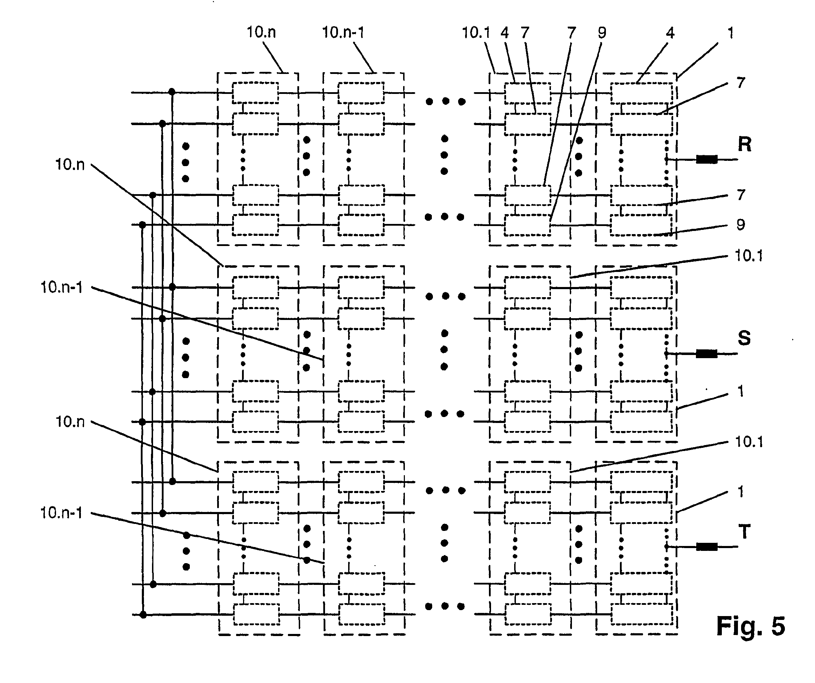

Wie vorstehend bereits erwähnt, ist bei der erfindungsgemässen Umrichterschaltung beim ersten Schaltgruppensystem 1 mindestens eine Zwischenschaltgruppe 7, d.h. eine oder mehrere Zwischenschaltgruppen 7 vorgesehen. Gemäss den Ausführungsformen nach Fig. 5, Fig. 6 und Fig. 9 der erfindungsgemässen Umrichterschaltung, welche nachfolgend detailliert erläutert werden, sind im Falle mehrerer vorgesehener Zwischenschaltgruppen 7 beim ersten Schaltgruppensystem 1 jeweils benachbarte Zwischenschaltgruppen 7 verkettet miteinander verbunden, wobei die Zwischenschaltgruppen 7 gemäss der Ausführungsform nach Fig. 1 oder Fig. 2 ausgebildet sind. Bei der Zwischenschaltgruppe 7 nach Fig. 1 oder Fig. 2 handelt es sich um einen Vierpol, so dass die Verkettung jeweils benachbarte Zwischenschaltgruppen 7 eine Verkettung von Vierpolen ist. Es versteht sich, dass die vorstehend genannte Verkettung jeweils benachbarter Zwischenschaltgruppen 7 beim ersten Schaltgruppensystem 1 auch mit den nach Fig. 3 ausgeführten Zwischenschaltgruppen 7 des ersten Schaltgruppensystems 1 möglich ist. Durch die Vielzahl an Zwischenschaltgruppen 7 beim ersten Schaltgruppensystem 1 kann die zu übertragende Leistung durch eine höhere über dem ersten Schaltgruppensystem 1 anliegende Gleichspannung erhöht werden, da sich diese Gleichspannung in einzelne Gleichspannungen entsprechend dem Kondensator 3 der zugehörigen ersten Hauptschaltgruppe 4 sowie an den Kondensatoren 6 der Vielzahl an Zwischenschaltgruppen 7 aufteilt. Darüber hinaus wird durch die Vielzahl eine Erhöhung der Anzahl an Schaltniveaus erzielt, wodurch sehr vorteilhaft eine weitere Reduzierung von Oberschwingungen auf der Phasenseite der Umrichterschaltung erreicht werden kann.

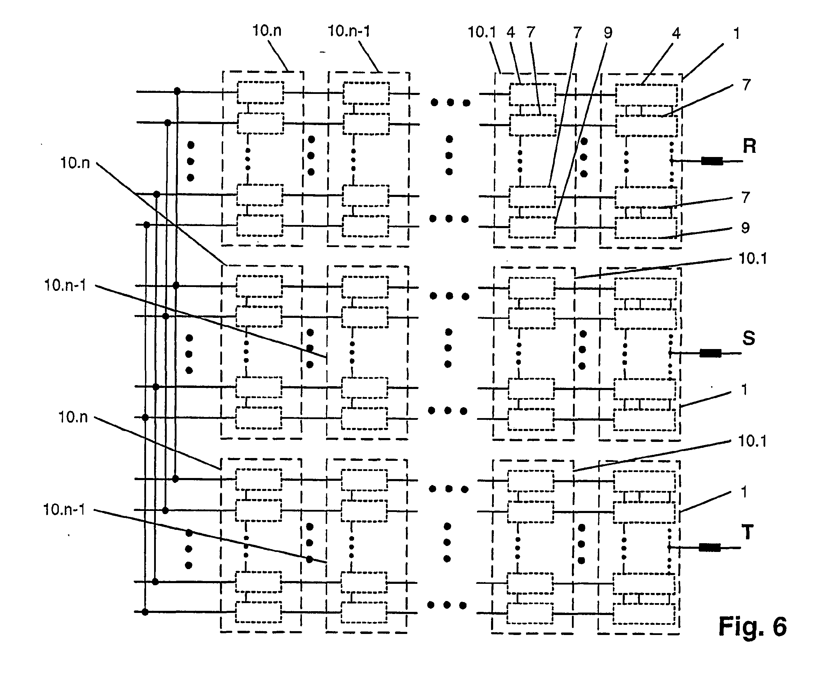

In Fig. 5 ist eine fünfte Ausführungsform der erfindungsgemässen Umrichterschaltung gezeigt, wobei darin die ersten Schaltgruppensysteme 1 der Phasen R, S, T mit den entsprechenden ersten und zweiten Hauptschaltgruppen 4, 9 und mehreren Zwischenschaltgruppen 7 nach Fig. 1 oder Fig. 2 ausgebildet sind. Weiterhin ist in Fig. 6 eine sechste Ausführungsform der erfindungsgemässen Umrichterschaltung gezeigt, wobei darin die ersten Schaltgruppensysteme 1 der Phasen R, S, T mit den entsprechenden ersten und zweiten Hauptschaltgruppen 4, 9 und mehreren Zwischenschaltgruppen 7 nach Fig. 3 ausgebildet sind. Beispielhaft sind bei der fünften Ausführungsform nach Fig. 5 und bei der sechsten Ausführungsform nach Fig. 6 drei Phasen gezeigt, wobei allgemein eine beliebige Anzahl an Phasen R, S, T denkbar ist. Gemäss Fig. 5 und Fig. 6 sind für jede Phase R, S, T n weitere Schaltgruppensysteme 10.1,...10.n vorgesehen, wobei n ≥ 1 ist und bei jedem der n weiteren Schaltgruppensysteme 10.1,...10.n einer der ansteuerbaren Leistungshalbleiterschalter 5 einer jeden Zwischenschaltgruppe 7 mit dem Kondensator 6 derselben Zwischenschaltgruppe 7 verbunden ist und die der ersten Hauptschaltgruppe 4 benachbarte Zwischenschaltgruppe 7 in Serie zur ersten Hauptschaltgruppe 4 geschaltet ist und die der zweiten Hauptschaltgruppe 9 benachbarte Zwischenschaltgruppe 7 in Serie zur zweiten Hauptschaltgruppe 9 geschaltet ist. Weiterhin sind gemäss Fig. 5 und Fig. 6 die erste Hauptschaltgruppe 4 des ersten Schaltgruppensystems 1 und die ersten Hauptschaltgruppen 4 der n weiteren Schaltgruppensysteme 10.1,...10.n zueinander in Serie geschaltet und die zweite Hauptschaltgruppe 9 des ersten Schaltgruppensystems 1 und die zweiten Hauptschaltgruppen 9 der n weiteren Schaltgruppensysteme 10.1,...10.n zueinander in Serie geschaltet. Jedes der n weiteren Schaltgruppensysteme 10.1,...10.n der Phasen R, S, T ist bezüglich der ersten und zweiten Hauptschaltgruppe 4, 9 und der oder den Zwischenschaltgruppen 7 vorzugsweise gemäss dem vorstehend beschriebenen ersten Schaltgruppensystem 1 nach Fig. 1 oder Fig. 2 ausgebildet, d.h. dass allgemein jedes der n weiteren Schaltgruppensysteme 10.1,...10.n der Phasen R, S, T die durch einen Leistungshalbleiterschalter 2 und durch einen mit dem Leistungshalbleiterschalter 2 verbundenen Kondensator 3 gebildete erste Hauptschaltgruppe 4 aufweist, wobei der Leistungshalbleiterschalter 2 der ersten Hauptschaltgruppe 4 durch ein passives nicht ansteuerbares elektronisches Bauelement 11 mit unidirektionaler Stromführungsrichtung gebildet ist. Zudem weist jedes der n weiteren Schaltgruppensysteme 10.1,...10.n der Phasen R, S, T mindestens die eine durch zwei in Serie geschaltete ansteuerbare Leistungshalbleiterschalter 5 und durch einen Kondensator 6 gebildete Zwischenschaltgruppe 7 auf, wobei die oder eine Zwischenschaltgruppe 7 mit der ersten Hauptschaltgruppe 4 verbunden ist. Desweiteren weist jedes der n weiteren Schaltgruppensysteme 10.1,...10.n der Phasen R, S, T die durch einen Leistungshalbleiterschalter gebildete zweite Hauptschaltgruppe 9 auf, wobei der Leistungshalbleiterschalter 8 der zweiten Hauptschaltgruppe 9 durch ein passives nicht ansteuerbares elektronisches Bauelement 11 mit unidirektionaler Stromführungsrichtung gebildet ist und die oder eine Zwischenschaltgruppe 7 mit der zweiten Hauptschaltgruppe 9 verbunden ist. In ähnlicher Weise wie nach Fig. 4, sind bei der fünften und sechsten Ausführungsform der erfindungsgemässen Umrichterschaltung gemäss Fig. 5 und Fig. 6 bei mehreren Phasen R, S, T die n-ten weiteren Schaltgruppensysteme 10.n der Phasen R, S, T parallel miteinander verbunden, d.h. die Kondensatoren 3 der ersten Hauptschaltgruppen 4 der n-ten weiteren Schaltgruppensysteme 10.n sind miteinander parallel verbunden und die Kondensatoren 6 der Zwischenschaltgruppen 7 der n-ten weiteren Schaltgruppensysteme 10.n sind miteinander parallel verbunden. Gemäss Fig. 5 und Fig. 6 sind die zweiten Hauptschaltgruppen 9 der n-ten weiteren Schaltgruppensysteme 10.n zudem miteinander verbunden. Mittels der Parallelschaltung der n-ten weiteren Schaltgruppensysteme 10.n der Phasen R, S, T, d.h. der Kondensatoren 3 der ersten Hauptschaltgruppen 4 und der Kondensatoren 6 der Zwischenschaltgruppen 7 wird vorteilhaft eine Erhöhung der Speicherfähigkeit von elektrischer Energie der gesamten Umrichterschaltung erreicht. Darüber hinaus kann durch die Parallelschaltung der Kondensatoren 3 der ersten Hauptschaltgruppen 4 und der Kondensatoren 6 der Zwischenschaltgruppen 7 unerwünschte Schwingungen der Spannung und des Stromes an den parallel geschalteten Kondensatoren 3 der ersten Hauptschaltgruppen 4 und an den parallel geschalteten Kondensatoren 6 der Zwischenschaltgruppen 7 gedämpft und somit vorteilhaft weitestgehend vermieden werden. Solche unerwünschten Schwingungen treten dann auch weitestgehend nicht an den Phasen R, S, T der Umrichterschaltung und damit schlussendlich auch nahezu nicht in einem üblicherweise an die Phasen angeschlossenen elektrischen Wechselspannungsnetz auf. Zudem bewirkt ein Anschluss einer elektrischen Einrichtung, beispielsweise einer Ladeeinrichtung, an einen der Kondensatoren 3 der ersten Hauptschaltgruppen 4 beziehungsweise an einen der Kondensatoren 6 der Zwischenschaltgruppen 7, dass alle Kondensatoren 3 der ersten Hauptschaltgruppen 4 beziehungsweise alle Kondensatoren 6 der Zwischenschaltgruppen 7 an die elektrische Einrichtung angeschlossen sind, so dass ein einzelnes Anschliessen der elektrischen Einrichtung an jeden der Kondensatoren der ersten Hauptschaltgruppen 4 beziehungsweise an jeden der Kondensatoren 6 der Zwischenschaltgruppen 7 vorteilhaft entfallen kann.

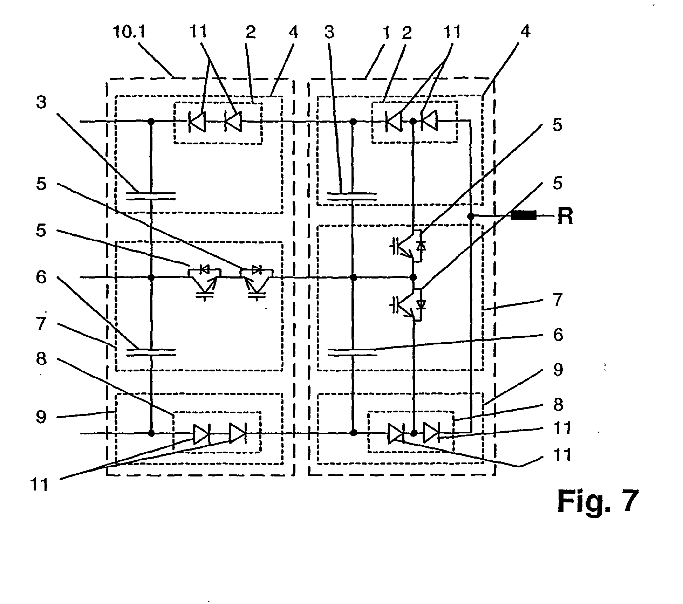

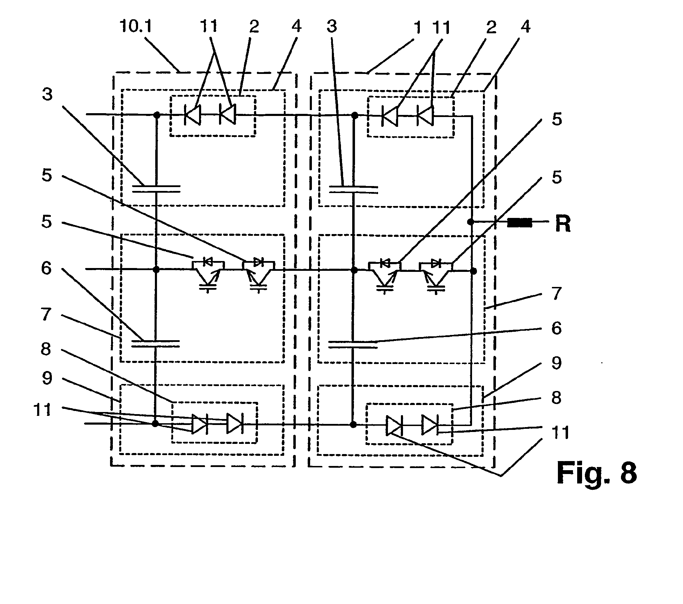

Durch die vorgesehenen n weiteren Schaltgruppensysteme 10.1,...10.n für jede Phase R, S, T gemäss Fig. 5 und Fig. 6 halbieren sich die Gleichspannungen der Kondensatoren 3, 6 des jeweiligen n-ten Schaltgruppensystems 10.n an den Kondensatoren 3, 6 des nachgeschalteten (n-1)-ten Schaltgruppensystems 10.n-1 im Betrieb der erfindungsgemässe Umrichterschaltung vorteilhaft. Bei n=1 weiteren Schaltgruppensystemen 10.1,...10.n, wie dies beispielhaft in einer siebten, insbesondere einphasigen, Ausführungsform der Umrichterschaltung gemäss Fig. 7 und in einer achten, insbesondere ebenfalls einphasigen, Ausführungsform der Umrichterschaltung gemäss Fig. 8 gezeigt ist, liegt demnach im Betrieb der Umrichterschaltung am Kondensator 3 der ersten Hauptschaltgruppe 4 des ersten Schaltgruppensystems 1 und am Kondensator 6 der Zwischenschaltgruppe 7 des ersten Schaltgruppensystems 1 jeweils die halbe Gleichspannung des Kondensators 3 der ersten Hauptschaltgruppe 4 des ersten weiteren Schaltgruppensystems 10.1 beziehungsweise des Kondensators 6 der Zwischenschaltgruppe 7 des ersten weiteren Schaltgruppensystems 10.1 an. Durch diese Halbierung der Gleichspannung werden die Leistungshalbleiterschalter 2, 5, 8 und die Kondensatoren 3, 6 des ersten Schaltgruppensystems 1 vorteilhaft entlastet. Allgemein kann dadurch eine Vielzahl an Schaltniveaus generiert werden, wodurch sehr vorteilhaft eine effektive Reduzierung von Oberschwingungen auf der Phasenseite erreicht werden kann. Gemäss Fig. 7 entspricht das erste Schaltgruppensystem 1 dem vorstehend detailliert beschriebenen Schaltgruppensystem 1 gemäss Fig. 3. Ferner entspricht das erste weitere Schaltgruppensystem 10.1 nach Fig. 7 dem vorstehend detailliert beschriebenen Schaltgruppensystem 1 gemäss Fig. 2, wobei es selbstverständlich auch denkbar ist, dass das erste weitere Schaltgruppensystem 10.1 nach Fig. 7 wie das vorstehend detailliert beschriebene Schaltgruppensystem 1 gemäss Fig. 1 ausgebildet ist. Gemäss Fig. 8 entspricht das erste Schaltgruppensystem 1 und das erste weitere Schaltgruppensystem 10.1 dem vorstehend detailliert beschriebenen Schaltgruppensystem 1 gemäss Fig. 2, wobei es selbstverständlich auch denkbar ist, dass das erste Schaltgruppensystem 1 und das erste weitere Schaltgruppensystem 10.1 nach Fig. 7 wie das vorstehend detailliert beschriebene Schaltgruppensystem 1 gemäss Fig. 1 ausgebildet ist.

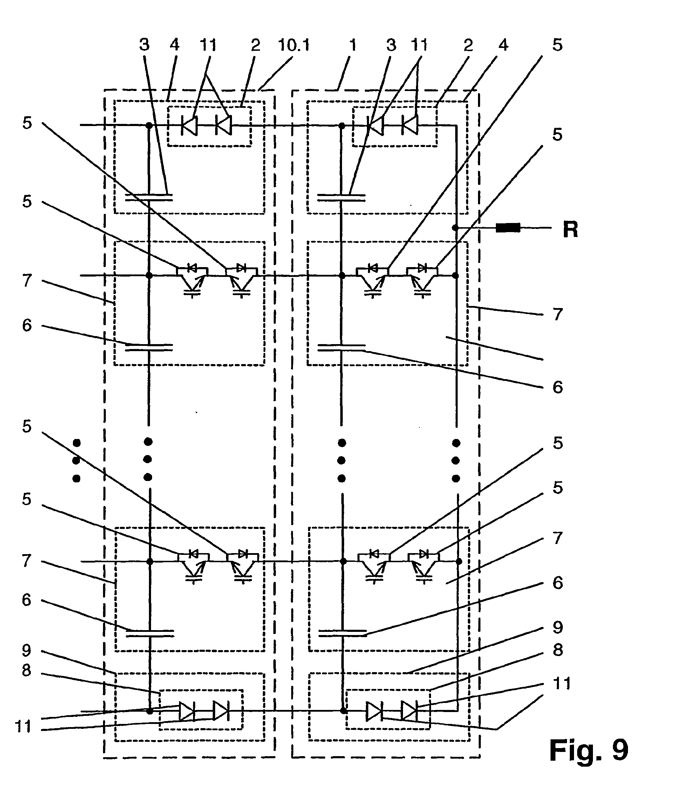

Gemäss der fünften und sechsten Ausführungsform der erfindungsgemässen Umrichterschaltung nach Fig. 5 und 6 entspricht die Anzahl der Zwischenschaltgruppen 7 eines jeden Schaltgruppensystems 10.1,...10.n der n weiteren Schaltgruppensysteme 10.1,...10.n der Anzahl der Zwischenschaltgruppen 7 des ersten Schaltgruppensystems 1, wobei bei jedem der n weiteren Schaltgruppensysteme 10.1,...10.n im Falle mehrerer vorgesehener Zwischenschaltgruppen 7 jeweils benachbarte Zwischenschaltgruppen 7 seriell miteinander verbunden sind. Weiterhin ist gemäss Fig. 5 und 6 und nach einer neunten Ausführungsform der erfindungsgemässen Umrichterschaltung gemäss Fig. 9 jede Zwischenschaltgruppe 7 des ersten weiteren Schaltgruppensystems 10.1 seriell mit jeweils einer Zwischenschaltgruppe 7 des ersten Schaltgruppensystems 1 verbunden. Beispielhaft ist bei der neunten Ausführungsform der erfindungsgemässen Umrichterschaltung gemäss Fig. 9 n=1, wobei die Umrichterschaltung insbesondere einphasig ausgebildet ist. Gemäss Fig. 9 entspricht das erste Schaltgruppensystem 1 und das erste weitere Schaltgruppensystem 10.1 dem vorstehend detailliert beschriebenen Schaltgruppensystem 1 gemäss Fig. 2 mit mehreren Zwischenschaltgruppen 7, wobei es selbstverständlich auch denkbar ist, dass das erste Schaltgruppensystem 1 und das erste weitere Schaltgruppensystem 10.1 nach Fig. 9 wie das vorstehend detailliert beschriebene Schaltgruppensystem 1 gemäss Fig. 1 mit mehreren Zwischenschaltgruppen 7 ausgebildet ist. Darüber hinaus ist es auch möglich, dass das erste Schaltgruppensystem 1 nach Fig. 9 wie das vorstehend detailliert beschriebene Schaltgruppensystem 1 gemäss Fig. 3 mit mehreren Zwischenschaltgruppen 7 ausgebildet ist und das erste weitere Schaltgruppensystem 10.1 nach Fig. 9 wie das vorstehend detailliert beschriebene Schaltgruppensystem 1 gemäss Fig. 1 mit mehreren Zwischenschaltgruppen 7 ausgebildet ist.

Für n ≥ 2, was der fünften und sechsten Ausführungsform der Umrichterschaltung gemäss Fig. 5 und Fig. 6 entspricht, ist jede Zwischenschaltgruppe 7 des n-ten weiteren Schaltgruppensystems 10.2,...10.n seriell mit jeweils einer Zwischenschaltgruppe 7 des (n-1)-ten Schaltgruppensystems 10.2,...10.n verbunden. Der Vorteil, dass allgemein die Anzahl der Zwischenschaltgruppen 7 eines jeden Schaltgruppensystems 10.1,...10.n der n weiteren Schaltgruppensysteme 10.1,...10.n der Anzahl der Zwischenschaltgruppen 7 des ersten Schaltgruppensystems 1 entspricht, liegt darin, dass ein symmetrischer und zudem modularer Aufbau der Umrichterschaltung erreicht werden kann, so dass die Umrichterschaltung einfach und schnell adaptierbar ist und somit an verschiedenste Schaltungsanforderungen angepasst werden kann. Weiterhin kann durch die in Fig. 5, Fig. 6 und Fig. 9 gezeigte Vielzahl an Zwischenschaltgruppen 7 für jedes Schaltgruppensystem 1, 10.1,...10.n die zu übertragende Leistung durch eine höhere über dem jeweiligen n-ten Schaltgruppensysteme 10.n anliegende Gleichspannung erhöht werden, da sich diese Gleichspannung in einzelne Gleichspannungen entsprechend dem Kondensator 3 der zugehörigen ersten Hauptschaltgruppe 4 sowie an den Kondensatoren 6 der Vielzahl an Zwischenschaltgruppen 7 aufteilt. Darüber hinaus wird durch die Vielzahl eine Erhöhung der Anzahl an Schaltniveaus erzielt, wodurch sehr vorteilhaft eine weitere Reduzierung von Oberschwingungen auf der Phasenseite der Umrichterschaltung erreicht werden kann.

Bereits erläutert wurde, dass die ansteuerbaren Leistungshalbleiterschalter 5 der Zwischenschaltgruppe 7 gemäss den Ausführungsformen der Umrichterschaltung nach Fig. 1 bis Fig. 10 als Bipolartransistoren mit isoliert angeordneten Ansteuerelektroden und antiparallel geschalteten Dioden ausgebildet sind. Mittels dieser Bipolartransistoren ist es vorteilhaft möglich, durch entsprechende Ansteuerung der Bipolartransistoren, d.h. beim Einschalten der Bipolartransistoren, den Stromgradient di/dt der Diode der ersten beziehungsweise der zweiten Hauptschaltgruppe 4, 9 gemäss Fig. 1 und Fig. 10 beziehungsweise der Dioden der ersten beziehungsweise der zweiten Hauptschaltgruppe 4, 9 gemäss Fig. 2, Fig. 3, Fig. 7, Fig. 8 und Fig. 9 kontrolliert zu begrenzen und somit vorteilhaft die jeweilige Diode vor einer Beschädigung oder gar Zerstörung zu schützen.

Insgesamt stellt die erfindungsgemässe Umrichterschaltung eine durch wenig Bauelemente gekennzeichnete und damit unkomplizierte, robuste und wenig störungsanfällige Lösung dar, wobei gleichzeitig eine Übertragung grosser Leistungen möglich ist

### Bezugszeichenliste

- 1: erstes Schaltgruppensystem
- 2: Leistungshalbleiterschalter der ersten Hauptschaltgruppe
- 3: Kondensator der ersten Hauptschaltgruppe
- 4: erste Hauptschaltgruppe
- 5: ansteuerbarer Leistungshalbleiterschalter der Zwischenschaltgruppe
- 6: Kondensator der Zwischenschaltgruppe
- 7: Zwischenschaltgruppe
- 8: Leistungshalbleiterschalter der zweiten Hauptschaltgruppe
- 9: zweite Hauptschaltgruppe
- 10.1,...10.n: weitere Schaltgruppensysteme
- 11: passives nicht ansteuerbares elektronisches Bauelement

## Patentansprüche

1. Umrichterschattung für mehrere Phasen (R, S, T), mit einem für jede Phase (R, S, T) vorgesehenen ersten Schaltgruppensystem (1) und mit einem weiteren oder n weiteren für jede Phase (R, 5, T) vorgesehenen Schaltgruppensystemen (10.1,...10.n). wobei n > 1 ist, wobei jedes Schaltgruppensystem (1, 10.1,...10.n) jeweils eine durch einen Leistungshalbleiterschalter (2) und durch einen mit dem Leistungshalbleiterschalter (2) verbundenen separaten Kondensator (3) gebildete erste Hauptschaltgruppe (4) aufweist, wobei der Leistungshalbleiterschalter (2) der ersten Hauptschaltgruppe (4) ausschliesslich durch ein passives nicht ansteuerbares elektronisches Bauelement (11) mit unidirektionaler Stromführungsrichtung gebildet ist, und wobei jedes Schaltgruppensystem (1, 10.1,...10.n) jeweils eine durch einen Leistungshalbleiterschalter (8) gebildete zweite Hauptschaltgruppe (9) aufweist, wobei der Leistungshalbleiterschalter (8) der zweiten Hauptschaltgruppe (9) ausschliesslich durch ein passives nicht ansteuerbares elektronisches Bauelement (11) mit unidirektionaler Stromführungsrichtung gebildet ist,
wobei die erste Hauptschaltgruppe (4) des ersten Schaltgruppensystems (1) und die ersten Hauptschaltgruppen (4) des weiteren oder der n weiteren Schaltgruppensysteme (10.1....10.n) zueinander in Serie geschaltet sind.
wobei die zweite Hauptschaltgruppe (9) des ersten Schaltgruppensystems (1) und die zweiten Hauptschaltgruppen (9) des weiteren oder der n weiteren Schaltgruppensysteme (10.1,...10.n) zueinander in Serie geschaltet sind,
wobei bei mehreren Phasen (R, S, T) die weiteren Schaltgruppensysteme (10.1) oder die n-ten weiteren Schaltgruppensysteme (10.n) der Phasen (R, S, T) parallel miteinander verbunden sind, **dadurch gekennzeichnet, dass** jedes Schaltgruppensystem (1, 10.1,...10.n) jeweils mindestens eine durch zwei in Serie geschaltete ansteuerbare Leistungshalbleiterschalter (5) und durch einen separaten Kondensator (6) gebildete Zwischenschaltgruppe (7) aufweist, wobei die oder eine der Zwischenschaltgruppen (7) mit der ersten Hauptschaltgruppe (4) verbunden ist und die oder eine Zwischenschaltgruppe (7) mit der zweiten Hauptschaltgruppe (9) verbunden ist, dass bei dem weiteren oder jedem der n weiteren Schaltgruppensysteme (10.1,...10.n) die der ersten Hauptschaltgruppe (4) benachbarte Zwischenschaltgruppe (7) in Serie zur ersten Hauptschaltgruppe (4) geschaltet ist und die der zweiten Hauptschaltgruppe (9) benachbarte Zwischenschaltgruppe (7) in Serie zur zweiten Hauptschaltgruppe (9) geschaltet ist, dass beim ersten Schaltgruppensystem (1) und bei dem weiteren oder bei jedem der n weiteren Schaltgruppensysteme (10.1,...10.n) einer der ansteuerbaren Laistungshalblelterschalter (5) einer jeden Zwischenschaltgruppe (7) mit dem Kondensator (6) derselben Zwischenschaltgruppe (7) verbunden ist.
dass beim ersten Schaltgruppensystem (1) die der ersten Hauptschaltgruppe (4) benachbarte Zwischenschaltgruppe (7) parallel zur ersten Hauptschaltgruppe (4) geschaltet ist, und
dass beim ersten Schaltgruppensystem (1) die der zweiten Hauptschaltgruppe (9) benachbarte Zwischenschaltgruppe (7) parallel zur zweiten Hauptschaltgruppe (9) geschaltet ist

2. Umrichterschaltung für mehrere Phasen (R, S, T), mit einem für jede Phase (R, S, T) vorgesehenen ersten Schaltgruppensystem (1) und mit einem weiteren oder n weiteren für jede Phase (R, S, T) vorgesehenen Schaltgruppensystemen (10.1,...10.n), wobei n > 1 ist,
wobei jedes Schaltgruppensystem (1,10.1,...10.n) jeweils eine durch einen Leistungshalbleiterschalter (2) und durch einen mit dem Leistungshalbleiterschalter (2) verbundenen separaten Kondensator (3) gebildete erste Hauptschaltgruppe (4) aufweist, wobei der Leistungshalbleiterschalter (2) der ersten Hauptschaltgruppe (4) ein ausschliesslich passives nicht ansteuerbares elektronisches Bauelement (11) mit unidirektionaler Stromführungsrichtung beinhaltet,
und Schaltgruppensystem (1, 10.1,...10.n) jeweils eine durch einen Leistungshalbleiterschalter (8) gebildete zweite Hauptschaltgruppe (9) aufweist, wobei der Leistungshaibteiterschaiter (8) der zweiten Hauptschaltgruppe (9) ausschllesslich durch ein passives nicht ansteuerbares elektronisches Bauelement (11) mit unidirektonaler Stromführungsrichtung gebildet ist,
wobei die erste Hauptschaltgruppe (4) des ersten Schattgruppensystems (1) und die ersten Hauptschaltgruppen (4) des weiteren oder der n weiteren Schaltgruppensysteme (10.1,...10.n) zueinander in Serie geschattet sind,
wobei die zweite Hauptschaltgruppe (9) des ersten Schattgruppensystems (1) und die zweiten Hauptschaltgruppen (9) des weiteren oder der n weiteren Schaltgruppensysteme (10.1,...10.n) zueinander in Serie geschaltet sind,
wobei bei mehreren Phasen (R, S, T) die weiteren Schaltgruppensysteme (10.1) oder die n-ten weiteren Schaltgruppensysteme (10.n) der Phasen (R, S, T) parallel miteinander verbunden sind.
**dadurch gekennzeichnet,**
**dass** jedes Schaltgruppensystem (1,10.1,...10.n) jeweils mindestens eine durch zwei in Serie geschaltete ansteuerbare Leistungshalbleiterschalter (5) und durch einen separaten Kondensator (6) gebildete Zwischenschaltgruppe (7) aufweist, wobei die oder eine der Zwischenschaltgruppen (7) mit der ersten Hauptschaltgruppe (4) verbunden ist und die oder eine Zwischenschaltgruppe (7) mit der zweiten Hauptschaltgruppe (9) verbunden ist,
**dass** bei dem weiteren oder jedem der n weiteren Schaltgruppensysteme (10.1....10.n) die der ersten Hauptschaltgruppe (4) benachbarte Zwischenschaltgruppe (7) in Serie zur ersten Hauptschaltgruppe (4) geschaltet ist und die der zweiten Hauptschaltgruppe (9) benachbarte Zwischenschaltgruppe (7) in Serie zur zweiten Hauptschaltgruppe (9) geschaltet ist,
**dass** beim ersten Schaltgruppensystem (1) und bei dem weiteren oder bei jedem der n weiteren Schaltgruppensysteme (10.1....10.n) der Leistungshatbteiterschaiter (2) der ersten Hauptschaltgruppe (4) ein weiteres passives nicht ansteuerbares elektronisches Bauelement (11) mit unidirektionaler Stromführungsrtchtung aufweist wobei das weitere elektronische Bauelement (11) in Serie zum bestehenden elektronischen Bauelement (11) geschaltet ist,
**dass** beim ersten Schaltgruppensystem (1) und bei dem weiteren oder bei jedem der n weiteren Schaltgruppensysteme (10.1,...10.n) der Leistungshalbiefterschalter (8) der zweiten Hauptschaltgruppe (9) ein weiteres passives nicht ansteuerbares elektronisches Bauelement (11) mit unidirektionaler Stromführungsrichtung aufweist, wobei das weitere elektronische Bauelement (11) in Serie zum bestehenden elektronischen Bauelement (11) geschaltet ist.
**dass** beim ersten Schaltgruppensystem (1) der Verbindungspunkt der beiden ansteuerbaren Leistungshalbleiterschalter (5) einer jeden Zwischenschaltgruppe (7) mit dem Kondensator (6) derselben Zwischenschaltgruppe (7) verbunden ist.
**dass** beim ersten Schaltgruppensystem (1) die der ersten Hauptschaltgruppe (4) benachbarte Zwischenschaltgruppe (7) mit dem einen der beiden ansteuerbaren Leistungshalbleiterschalter (5) mit dem Verbindungspunkt der beiden elektronischen Bauelemente (11) der ersten Hauptschaltgruppe (4) verbunden ist, und
**dass** beim ersten Schaltgruppensystem (1) die der zweiten Hauptschaltgruppe (9) benachbarte Zwischenschaltgruppe (7) mit dem anderen der beiden ansteuerbaren Leistungshalbiefterschalter (5) mit dem Verbindungspunkt der beiden elektronischen Bauelemente (11) der zweiten Hauptschattgruppe (9) verbunden ist.

3. Umrichterschaltung nach Anspruch 1, **dadurch gekennzeichnet, dass** beim ersten Schaltgruppensystem (1) und bei dem weiteren oder bei jedem der n weiteren Schaltgruppensysteme (10.1,...10.n) der Leistungshalblefterschalter (2) der ersten Hauptschaltgruppe (4) ein weiteres passives nicht ansteuerbares elektronisches Bauelement (11) mit unidirektionaler Stromführungsrichtung aufweist, wobei das weitere elektronische Bauelement (11) in Serie zum bestehenden elektronischen Bauelement (11) geschaltet ist, und
dass beim ersten Schaltgruppensystem (1) und bei dem weiteren oder bei jedem der n weiteren Schaltgruppensysteme (10.1,...10.n) der Leistungshalbleiterschalter (8) der zweiten Hauptschaltgruppe (9) ein weiteres passives nicht ansteuerbares elektronisches Bauelement (11) mit unidirektionaler Stromführungsnehtung aufweist, wobei das weitere elektronische Bauelement (11) in Serie zum bestehenden elektronischen Bauelement (11) geschaltet ist.

4. Umrichterschaltung nach einem der Ansprüche 1 bis 3, **dadurch gekennzeichnet, dass** das elektronische Bauelement (11) eine Diode ist.

5. Umrichterschaltung nach einem der Ansprüche 1 bis 4, **dadurch gekennzeichnet, dass** beim ersten Schaltgruppensystem (1) im Falle mehrerer vorgesehener Zwischenschaftgruppen (7) jeweils benachbarte Zwischenschaltgruppen (7) verkettet miteinander verbunden sind.

6. Umrichterschaltung nach einem der Ansprüche 1 bis 5, **dadurch gekennzeichnet, dass** die Anzahl der Zwischenschaltgruppen (7) eines jeden Schaltgruppensystems (10.1,...10.n) des weiteren oder der n weiteren Schaltgruppensysteme (10.1,...10.n) der Anzahl der Zwischenschaltgruppen (7) des ersten Schaltgruppensystems (1) entspricht, und dass bei dem weiteren oder bei jedem der n weiteren Schaltgruppensysteme (10.1,...10.n) im Falle mehrerer vorgesehener Zwischenschaltgruppen (7) jeweils benachbarte Zwischenschaltgruppen (7) seriell miteinander verbunden sind.

7. Umrichterschaltung nach Anspruch 6, **dadurch gekennzeichnet, dass** jede Zwischenschaltgruppe (7) des ersten weiteren Schaltgruppensystems (10.1) seriell mit jeweils einer Zwischenschaltgruppe (7) des ersten Schaltgruppensystems (1) verbunden ist.

8. Umrichterschaltung nach Anspruch 7, **dadurch gekennzeichnet, dass** für n ≥ 2 jede Zwischenschaltgruppe (7) des n-ten weiteren Schaltgruppensystems (10.2,...10.n) seriell mit jeweils einer Zwischenschaltgruppe (7) des (n-1)-ten Schaltgruppensystems (10.2,...10.n) verbunden ist.

## Claims

1. Converter circuit for a plurality of phases (R, Y, B), having a first switching group system (1) which is provided for each phase (R, Y, B) and having one further or n further switching group systems (10.1,...10.n) which are provided for each phase (R, Y, B), where n > 1,
with each switching group system (1, 10.1,...10.n) having in each case one first main switching group (4) which is formed by a power semiconductor switch (2) and by a separate capacitor (3) which is connected to the power semiconductor switch (2), with the power semiconductor switch (2) in the first main switching group (4) being formed exclusively by a passive electronic component (11) which cannot be driven and has a unidirectional current-flow direction,
and with each switching group system (1, 10.1,...10.n) having in each case one second main switching group (9) which is formed by a power semiconductor switch (8), with the power semiconductor switch (8) in the second main switching group (9) being formed exclusively by a passive electronic component (11) which cannot be driven and has a unidirectional current-flow direction, with the first main switching group (4) in the first switching group system (1) and the first main switching groups (4) in the further or the n further switching group systems (10.1,...10.n) being connected in series with one another,
with the second main switching group (9) in the first switching group system (1) and the second main switching groups (9) in the further or the n further switching group systems (10.1,...10.n) being connected in series with one another,
with, if there are a plurality of phases (R, Y, B), the further switching group systems (10.1) or the n-th further switching group systems (10.n) for the phases (R, Y, B) being connected in parallel with one another,
**characterized**
**in that** each switching group system (1, 10.1,...10.n) has in each case at least one intermediate switching group (7), which is formed by two series-connected power semiconductor switches (5) which can be driven and by a separate capacitor (6), with the or one of the intermediate switching groups (7) being connected to the first main switching group (4), and the or an intermediate switching group (7) is connected to the second main switching group (9),
**in that**, in the case of the further or each of the n further switching group systems (10.1,...10.n), the intermediate switching group (7) which is adjacent to the first main switching group (4) is connected in series with the first main switching group (4), and the intermediate switching group (7) which is adjacent to the second main switching group (9) is connected in series with the second main switching group (9),
**in that**, in the case of the first switching group system (1) and the case of the further or each of the n further switching group systems (10.1,...10.n), one of the power semiconductor switches (5) which can be driven in each intermediate switching group (7) is connected to the capacitor (6) in the same intermediate switching group (7),
**in that**, in the case of the first switching group system (1), the intermediate switching group (7) which is adjacent to the first main switching group (4) is connected in parallel with the first main switching group (4), and
**in that**, in the case of the first switching group system (1), the intermediate switching group (7) which is adjacent to the second main switching group (9) is connected in parallel with the second main switching group (9).

2. Converter circuit for a plurality of phases (R, Y, B), having a first switching group system (1) which is provided for each phase (R, Y, B) and having one further or n further switching group systems (10.1,...10.n) which are provided for each phase (R, Y, B), where n > 1,
with each switching group system (1, 10.1,...10.n) having in each case one first main switching group (4) which is formed by a power semiconductor switch (2) and by a separate capacitor (3) which is connected to the power semiconductor switch (2), with the power semiconductor switch (2) in the first main switching group (4) comprising exclusively a passive electronic component (11) which cannot be driven and has a unidirectional current-flow direction,
and with each switching group system (1, 10.1,...10.n) having in each case one second main switching group (9) which is formed by a power semiconductor switch (8), with the power semiconductor switch (8) in the second main switching group (9) being formed exclusively by a passive electronic component (11) which cannot be driven and has a unidirectional current-flow direction,
with the first main switching group (4) in the first switching group system (1) and the first main switching groups (4) in the further or the n further switching group systems (10.1,...10.n) being connected in series with one another,
with the second main switching group (9) in the first switching group system (1) and the second main switching groups (9) in the further or the n further switching group systems (10.1,...10.n) being connected in series with one another,
with, if there are a plurality of phases (R, Y, B), the further switching group systems (10.1) or the n-th further switching group systems (10.n) of the phases (R, Y, B) being connected in parallel with one another,
**characterized in that** each switching group system (1 10.1,...10.n) has in each case at least one intermediate switching group (7), which is formed by two series-connected power semiconductor switches (5) which can be driven and by a separate capacitor (6), with the or one of the intermediate switching groups (7) being connected to the first main switching group (4), and the or an intermediate switching group (7) is connected to the second main switching group (9),
**in that**, in the case of the further or each of the n further switching group systems (10.1,...10.n), the intermediate switching group (7) which is adjacent to the first main switching group (4) is connected in series with the first main switching group (4), and the intermediate switching group (7) which is adjacent to the second main switching group (9) is connected in series with the second main switching group (9),
**in that**, in the case of the first switching group system (1) and the case of the further or each of the n further switching group systems (10.1,...10.n), the power semiconductor switch (2) in the first main switching group (4) has a further passive electronic component (11) which cannot be driven and has a unidirectional current-flow direction, with the further electronic component (11) being connected in series with the existing electronic component (11),
**in that**, in the case of the first switching group system (1) and the case of the further or each of the n further switching group systems (10.1,...10.n), the power semiconductor switch (8) in the second main switching group (9) has a further passive electronic component (11) which cannot be driven and has a unidirectional current-flow direction, with the further electronic component (11) being connected in series with the existing electronic component (11),
**in that**, in the case of the first switching group system (1), the junction point between the two power semiconductor switches (5) which can be driven in each intermediate switching group (7) is connected to the capacitor (6) in the same intermediate switching group (7),
**in that**, in the case of the first switching group system (1), the intermediate switching group (7) which is adjacent to the first main switching group (4) and has one of the two power semiconductor switches (5) which can be driven is connected to the junction point between the two electronic components (11) in the first main switching group (4), and
**in that**, in the case of the first switching group system (1), the intermediate switching group (7) which is adjacent to the second main switching group (9) and has the other of the two power semiconductor switches (5) which can be driven is connected to the junction point between the two electronic components (11) in the second main switching group (9).

3. Converter circuit according to Claim 1, **characterized in that**, in the case of the first switching group system (1) and in the case of the further or each of the n further switching group systems (10.1,...10.n) the power semiconductor switch (2) in the first main switching group (4) has a further passive electronic component (11) which cannot be driven and has a unidirectional current-flow direction, with the further electronic component (11) being connected in series with the existing electronic component (11), and
**in that**, in the case of the first switching group system (1) and in the case of the further or each of the n further switching group systems (10.1,...10.n), the power semiconductor switch (8) in the second main switching group (9) has a further passive electronic component (11) which cannot be driven and has a unidirectional current-flow direction, with the further electronic component (11) being connected in series with the existing electronic component (11).

4. Converter circuit according to one of Claims 1 to 3, **characterized in that** the electronic component (11) is a diode.

5. Converter circuit according to one of Claims 1 to 4, **characterized in that**, in the case of the first switching group system (1), if a plurality of intermediate switching groups (7) are provided, respectively adjacent intermediate switching groups (7) are connected to one another in a chain.

6. Converter circuit according to one of Claims 1 to 5, **characterized in that** the number of intermediate switching groups (7) in each switching group system (10.1,...10.n) in the further or the n further switching group systems (10.1,...10.n) corresponds to the number of intermediate switching groups (7) in the first switching group system (1), and **in that**, in the case of the further or each of the n further switching group systems (10.1,...10.n) if a plurality of intermediate switching groups (7) are provided, respectively adjacent intermediate switching groups (7) are connected to one another in series.

7. Converter circuit according to Claim 6, **characterized in that** each intermediate switching group (7) in the first further switching group system (10.1) is connected in series with in each case one intermediate switching group (7) in the first switching group system (1).

8. Converter circuit according to Claim 7, **characterized in that**, if n ≥ 2, each intermediate switching group (7) in the n-th further switching group system (10.2,...10.n) is connected in series to in each case one intermediate switching group (7) in the (n-1)-th switching group system (10.2,...10.n).

## Revendications

1. Circuit convertisseur pour plusieurs phases (R,S,T), comportant un premier système de groupe de commutation (1) prévu pour chaque phase (R,S,T) et un autre ou n autres systèmes de groupes de commutation (10.1...10.n) prévus pour chaque phase (R,S,T), dans lequel n > 1
dans lequel chaque système de groupe de commutation (1,10.1...10.n) présente respectivement un premier groupe de commutation principal (4) formé par un commutateur à semi-conducteur de puissance (2) et par un condensateur (3) séparé relié au commutateur à semi-conducteur de puissance (2), dans lequel le commutateur à semi-conducteur de puissance (2) est formé exclusivement par un composant (11) électronique passif ne pouvant pas être commandé avec une direction d'alimentation en courant unidirectionnelle,
et dans lequel chaque système de groupe de commutation (1, 10.1,...10.n) présente respectivement un deuxième groupe de commutation principal (9) formé par un commutateur à semi-conducteur de puissance (8), dans lequel le commutateur à semi-conducteur de puissance (8) du deuxième groupe de commutation principal (9) est exclusivement formé par un composant (11) électronique passif ne pouvant pas être commandé avec une direction d'alimentation en courant unidirectionnelle,
dans lequel le premier groupe de commutation principal (4) du premier système de groupe de commutation (1) et les premiers groupes de commutation principaux (4) de l'autre ou des n autres systèmes de groupes de commutation (10.1,...10.n) sont branchés en série les uns aux autres,
dans lequel le deuxième groupe de commutation principal (9) du premier système de groupe de commutation (1) et les deuxièmes groupes de commutation principaux (9) de l'autre ou des n autres systèmes de groupes de commutation (10.1,...10.n) sont branchés en série les uns aux autres,
dans lequel en présence de plusieurs phases (R,S,T), les autres systèmes de groupes de commutation (10.1) ou les n-èmes autres systèmes de groupes de commutation (10.n) des phases (R,S,T) sont reliés en parallèle les uns aux autres,
**caractérisé en ce que**
chaque système de groupe de commutation (1,10.1...10.n) présente respectivement au moins un groupe de commutation intermédiaire (7) formé par deux commutateurs à semi-conducteur de puissance (5) branchés en série, pouvant être commandés et par un condensateur (6) séparé, dans lequel le ou un des groupes de commutation intermédiaire (7) est relié au premier groupe de commutation principal (4) et le ou un des groupes de commutation intermédiaire (7) est relié au deuxième groupe de commutation principal (9),
dans l'autre ou chacun des n autres systèmes de groupes de commutation (10.1...10.n), le groupe de commutation intermédiaire (7) voisin du premier groupe de commutation principal (4) est branché en série au premier groupe de commutation principal (4) et le groupe de commutation intermédiaire (7) voisin du deuxième groupe de commutation principal (9) est branché en série au deuxième groupe de commutation principal (9),
**caractérisé en ce que** dans le premier système de groupe de commutation (1) et dans l'autre ou dans chacun des n autres systèmes de groupes de commutation (10.1,...10.n), un des commutateurs à semi-conducteur de puissance (5) pouvant être commandés d'un de chaque groupe de commutation intermédiaire (7) est relié au condensateur (6) du même groupe de commutation intermédiaire (7),
dans le premier système de groupe de commutation (1), le groupe de commutation intermédiaire (7) voisin du premier groupe de commutation principal (4) est branché en parallèle au premier groupe de commutation principal (4), et dans le premier système de groupe de commutation (1), le groupe de commutation intermédiaire (7) voisin du deuxième groupe de commutation principal (9) est branché en parallèle au deuxième groupe de commutation principal (9).

2. Circuit convertisseur pour plusieurs phases (R,S,T) comportant un premier système de groupes de commutation (1) prévu pour chaque phase (R,S,T) et un autre ou n autres systèmes de groupes de commutation (10.1...10.n) prévus pour chaque phase (R,S,T), dans lequel n > 1,
dans lequel chaque système de groupe de commutation (1,10.1...10.n) présente respectivement un premier groupe de commutation principal (4) formé par un commutateur à semi-conducteur de puissance (2) et par un condensateur (3) séparé, relié au commutateur à semi-conducteur de puissance (2), dans lequel le commutateur à semi-conducteur de puissance (2) du premier groupe de commutation principal (4) contient un composant (11) électronique exclusivement passif, ne pouvant pas être commandé avec une direction d'alimentation en courant unidirectionnelle,
et dans lequel chaque système de groupe de commutation (1,10.1...10.n) présente respectivement un deuxième groupe de commutation principal (9) formé par un commutateur à semi-conducteur de puissance (8), dans lequel le commutateur à semi-conducteur de puissance (8) du deuxième groupe de commutation principal (9) est formé exclusivement par un composant (11) électronique, passif, ne pouvant pas être commandé avec une direction d'alimentation en courant unidirectionnelle,
dans lequel le premier groupe de commutation principal (4) du premier système de groupe de commutation (1) et les premiers groupes de commutation principaux (4) de l'autre ou des n autres systèmes de commutation de groupe (10.1,...10.n) sont branchés en série les uns aux autres,
dans lequel le deuxième groupe de commutation principal (9) du premier système de groupe de commutation (1) et les deuxièmes groupes de commutation principaux (9) de l'autre ou des n autres systèmes de groupes de commutation (10.1,...10.n) sont branchés en série les uns aux autres,
dans lequel en présence de plusieurs phases (R,S,T), les autres systèmes de groupes de commutation (10.1) ou les n-èmes autres systèmes de groupes de commutation (10.n) des phases (R,S,T) sont reliés en parallèle les uns aux autres,
**caractérisé en ce que**
chaque système de groupe de commutation (1,10.1...10.n) présente respectivement au moins un groupe de commutation intermédiaire (7) formé par deux commutateurs à semi-conducteur de puissance (5) pouvant être commandés, branchés en série et par un condensateur (6) séparé, dans lequel le ou un des groupes de commutation intermédiaire (7) est relié au premier groupe de commutation principal (4),
dans l'autre ou chacun des n autres systèmes de groupes de commutation (10.1,...10.n), le groupe de commutation intermédiaire (7) voisin du premier groupe de commutation principal (4) est branché en série au premier groupe de commutation principal (4) et le groupe de commutation intermédiaire (7) voisin du deuxième groupe de commutation principal (9) est branché en série au deuxième groupe de commutation principal (9),
dans le premier système de groupe de commutation (1) et dans l'autre ou dans chacun des n autres systèmes de groupes de commutation (10.1 ... 10.n), le commutateur à semi-conducteur de puissance (2) du premier groupe de commutation principal (4) présente un autre composant (11) électronique passif, ne pouvant pas être commandé avec une direction d'alimentation en courant unidirectionnelle,
dans le premier système de groupe de commutation (1) et dans l'autre ou chacun des n autres systèmes de groupes de commutation (10.1,...10.n), le commutateur à semi-conducteur de puissance (8) du deuxième groupe de commutation principal (9) présente un autre composant (11) électronique passif, ne pouvant pas être commandé avec une direction d'alimentation en courant unidirectionnelle, dans lequel l'autre composant électronique (11) est branché en série au composant (11) électronique constitué,
dans le premier système de groupe de commutation (1), le point de liaison des deux commutateurs à semi-conducteurs de puissance (5) pouvant être commandés d'un de chacun des groupes de commutation intermédiaire (7) est relié au condensateur (6) du même groupe de commutation intermédiaire (7),
dans le premier système de groupe de commutation (1), le groupe de commutation intermédiaire (7) voisin du premier groupe de commutation principal (4) est relié par un des deux commutateurs à semi-conducteurs de puissance pouvant être commandé au point de liaison des deux composants (11) électroniques du premier group de commutation principal (4), et
dans le premier système de groupe de commutation (1), le groupe de commutation intermédiaire (7) voisin du deuxième groupe de commutation principal (9) est relié par l'autre des deux commutateurs à semi-conducteurs de puissance (5) pouvant être commandés au point de liaison des deux composants (11) électroniques du deuxième groupe de commutation principal (9).

3. Circuit convertisseur selon la revendication 1, **caractérisé en ce que** dans le premier système de groupe de commutation (1) et dans l'autre ou dans chacun des n autres systèmes de groupes de commutation (10.1...10.n), le commutateur à semi-conducteur de puissance (2) du premier groupe de commutation principal (4) présente un autre composant (11) électronique, passif, ne pouvant pas être commandé avec une direction d'alimentation en courant unidirectionnelle, dans lequel l'autre composant électronique (11) est branché en série au composant électronique (11) constitué, et
dans le premier système de groupe de commutation (1) et dans l'autre ou dans chacun des n autres systèmes de groupes de commutation (10.1...10.n), le commutateur à semi-conducteur de puissance du deuxième groupe de commutation principal (9)présente un autre composant (11) électronique passif, ne pouvant pas être commandé avec une direction d'alimentation en courant unidirectionnelle, dans lequel l'autre composant électronique (11) est branché en série au composant électronique (11) constitué.

4. Circuit convertisseur selon une des revendications 1 à 3, **caractérisé en ce que** le composant électronique (11) est une diode.

5. Circuit convertisseur selon une des revendications 1 à 4, **caractérisé en ce que** dans le premier système de groupe de commutation (1), en cas de plusieurs groupes de commutation intermédiaire (7) prévus, des groupes de commutation intermédiaire (7) respectivement voisins sont reliés en chaîne les uns aux autres.

6. Circuit convertisseur selon une des revendications 1 à 5, **caractérisé en ce que** le nombre des groupes de commutation intermédiaire (7) de chacun des systèmes de groupes de commutation (10.1,...10.n) de l'autre ou des n autres systèmes de groupes de commutation (10.1,...10.n) correspond au nombre de groupes de commutation intermédiaires (7) du premier système de groupe de commutation (1), et **en ce que** dans l'autre ou dans chacun des n autres systèmes de groupes de commutation (10.1,..10.n), en cas de plusieurs groupes de commutation intermédiaires (7) prévus, des groupes de commutation intermédiaire (7) respectivement voisins sont reliés en série les uns aux autres.

7. Circuit convertisseur selon la revendication 6, **caractérisé en ce que** chaque groupe de commutation intermédiaire (7) du premier autre système de groupe de commutation (10.1) est relié en série avec respectivement un groupe de commutation intermédiaire (7) du premier système de groupe de commutation (1).

8. Circuit convertisseur selon la revendication 7, **caractérisé en ce que** pour n ≥ 2, chaque groupe de commutation intermédiaire (7) du n-ème autre système de groupe de commutation (10.2...10.n) est relié en série avec respectivement un groupe de commutation intermédiaire (7) du (n-1) ème système de groupe de commutation (10.2...10.n).
